# EUROPEAN PATENT APPLICATION

(11) **EP 2 071 960 A1**
(43) Date of publication of application: **24.06.2009**
(21) Application number: 07123845.5
(22) Date of filing: 20.12.2007
(51) Int. Cl.: A23F 5/24, A47J 31/24

(54) **Method and appliance for making ice coffee**

(71) Applicant: Koninklijke Philips Electronics N.V., 5621 BA Eindhoven (NL)
(72) Inventor: The designation of the inventor has not yet been filed
(74) Representative: Smilde-Westmaas, Mariëtte Johanna

(57) **Abstract**

A method for making ice coffee comprises the following steps: extracting coffee by using water at a temperature that is in a range of 35°C to 55°C, at a normal brewing pressure that is in a range of ambient pressure to 1.5 bar, and at an extraction time that is shorter than 60 seconds, and supplying a quantity of ice to the beverage which is obtained as a result of this extraction process, in order to get the ice coffee at a temperature at which it is ready to drink. An appliance for carrying out the method may also be adapted to make hot coffee, so that a user may choose which type of coffee he/she would like to receive from the appliance.

## Description

### FIELD OF THE INVENTION

The present invention relates to a method and an appliance for making ice coffee.

### BACKGROUND OF THE INVENTION

Ice coffee is a popular beverage, and there is a need for providing a domestic appliance which is adapted to make ice coffee in a short time period. Disadvantages of making ice coffee by first making coffee in a normal way, i.e. by performing a coffee extraction process with water that is at a temperature of about 95°C, and subsequently allowing the coffee to cool down are that the time period is much too long and the taste of the ice coffee is really bad. The time period may be shortened by adding ice to the hot coffee, but this is not a practical solution, as this requires making coffee at a high concentration, due to the fact that dilution of the coffee takes place when the ice is added.

### SUMMARY OF THE INVENTION

It is an object of the present invention to provide a method for making ice coffee, by means of which it is possible to obtain ice coffee having a nice taste, in a time that is so short that a person may be expected to be willing to wait during this time.

The object of the present invention is achieved by a method for making ice coffee, wherein coffee is extracted by using water at a temperature that is in a range of 35°C to 55°C, at a normal brewing pressure that is in a range of ambient pressure to 1.5 bar, and at an extraction time that is shorter than 60 seconds, and wherein a quantity of ice is supplied to the beverage which is obtained as a result of this extraction process, in order to get the ice coffee at a temperature at which it is ready to drink. With respect to the extraction time, it is noted that this time may be in a range of 30 seconds to 60 seconds, for example. A temperature at which the ice coffee is ready to drink is normally in a range of 5°C to 7°C.

An important aspect of the method according to the present invention is that the coffee extraction time is relatively short, especially in comparison with industrial methods for making ice coffee, which normally take hours for being carried out. An extraction efficiency which is needed for actually achieving the short extraction time may be obtained by adapting a quantity of coffee extract, which is normally a quantity of ground coffee beans.

Since the coffee is made at a relatively low temperature, namely a temperature that is in a range of 35°C to 55°C, the quantity of ice that needs to be added to the beverage which is obtained as a result of the extraction process is limited, so that the concentration of this beverage may be in an acceptable range. Preferably, the water is heated to a temperature that is in a range of 40°C to 50°C. Experiments have shown that using water that is at a temperature of about 45°C yields very good results.

In order to get ice coffee with milk, the method according to the present invention may comprise an additional step of supplying milk to the beverage which is obtained as a result of the coffee extraction process.

It is also an object of the present invention to provide an appliance for making ice coffee, by means of which it is possible to obtain ice coffee having a nice taste, in a time that is so short that a person may be expected to be willing to wait during this time.

The object of the present invention is achieved by an appliance for making ice coffee, comprising:
- a brewing space for accommodating a quantity of coffee extract;
- means for supplying water to the brewing space;
- means for heating the water;
- a mixing space which is located downstream of the brewing space;
- means for supplying ice to the mixing space;
- means which are adapted to pumping liquids; and
- controlling means for controlling a process of making the ice coffee, wherein the controlling means are adapted to control the water heating means for heating the water to a temperature that is in a range of 35°C to 55°C, to control the ice supplying means for being in an activated state, and to control the liquids pumping means for pumping the water, the beverage which is obtained when a coffee extraction process is performed, and the ice coffee which is obtained when this beverage is mixed with the ice, at a normal brewing pressure that is in a range of ambient pressure to 1.5 bar, and for performing a pumping action only during an extraction time that is shorter than 60 seconds.

In a preferred embodiment of the appliance, the controlling means are adapted to control the water heating means for heating the water to a temperature that is in a range of 40°C to 50°C.

The appliance may also be used for making ice coffee with milk when the appliance is furthermore equipped with means for supplying milk to the mixing space.

In a very advantageous embodiment, the appliance according to the present invention is suitable for making ice coffee or hot coffee, depending on a choice of a user of the appliance. In particular, the controlling means may be further suitable to be used for controlling a process of making hot coffee, wherein the controlling means are adapted to control the water heating means for heating the water to a temperature that is in a range of 85°C to close to the boiling point, to control the ice supplying means for being in a deactivated state, and to control the liquids pumping means for pumping the water, and the hot coffee which is obtained when a coffee extraction process is performed, at a brewing pressure that is significantly higher than ambient pressure, and for performing a pumping action only during an extraction time that is shorter than 60 seconds, wherein means which are operable by a user of the appliance are provided for activating the controlling means for realizing a process of making ice coffee or a process of making hot coffee, depending on input provided by the user.

The means for supplying water to the brewing space may comprise two water flow paths, wherein one water flow path leads to the brewing space through the water heating means, and wherein another water flow path bypasses the water heating means and leads directly to the brewing space. In this way, it is possible to have only one heating unit, namely a heating unit which is capable of heating the water to a temperature that is in a range of 85°C to close to the boiling point, and still have water at a lower temperature, as the hot water may be mixed with cold water. Within the scope of the present invention, any suitable heating unit such as a boiler, a thermo block or a flow-through heater may be applied.

In the appliance which is suitable for making ice coffee or hot coffee, the water heating means may comprise two separate heating units and/or the liquids pumping means may comprise two separate pumping units. In general, such an appliance may be designed in various ways, varying from a design having two separate units, wherein one unit is adapted to make ice coffee and another unit is adapted to make hot coffee, to a design having only one set of components which may be operated in different ways. In the appliance, various valves may be arranged at suitable positions, wherein these valves may be of any suitable type, depending on their specific functions. For example, 2-way valves, non-return valves and/or control valves may be used.

The above-described and other aspects of the present invention will be apparent from and elucidated with reference to the following description of embodiments of an appliance which is suitable for both making ice coffee and hot coffee.

### BRIEF DESCRIPTION OF THE DRAWINGS

The present invention will now be explained in greater detail with reference to the figures, in which equal or similar parts are indicated by the same reference signs, and in which:
Figures 1-4 show a number of components of embodiments of an appliance according to the present invention which is equipped with a single heating unit, and a cup for receiving coffee from the appliance;
Figures 5-10 show a number of components of embodiments of an appliance according to the present invention which is equipped with two heating units, and a cup for receiving coffee from the appliance; and
Figure 11 provides an overview of the various embodiments as shown in figures 1-10.

### DETAILED DESCRIPTION OF EMBODIMENTS

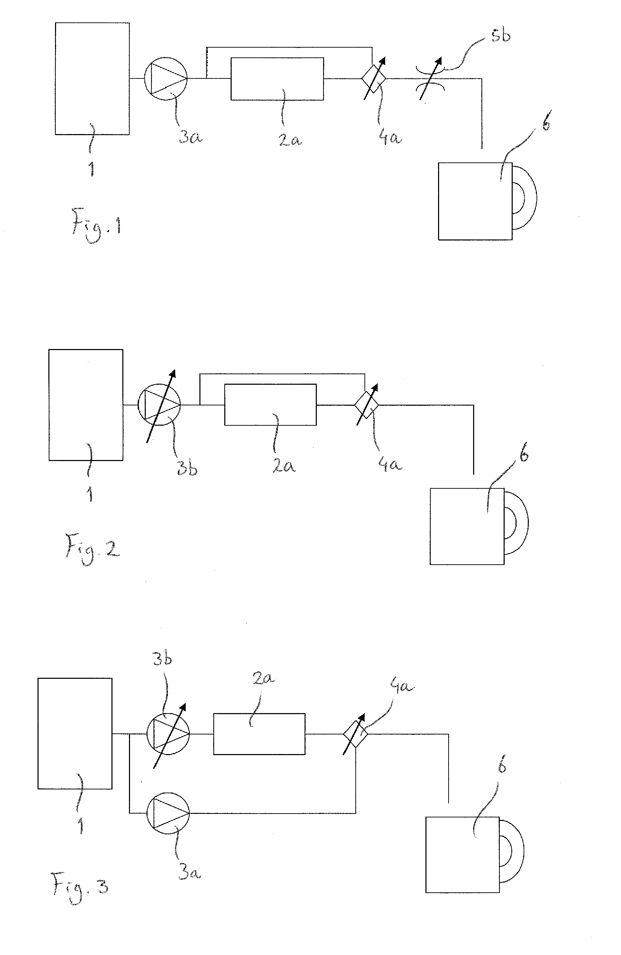

Figures 1 to 10 serve to illustrate various embodiments of an appliance according to the present invention, which is suitable to be used for making ice coffee, and which is also suitable for making hot coffee, so that a user of the appliance may choose which type of coffee he/she would like to have at any given moment.

The design of the appliance according to the present invention may be based on the design of existing appliances for making hot coffee, wherein it is not necessary to carry out large alterations of this design. In any case, the appliance according to the present invention is adapted to realizing two different flow speeds and two brewing temperatures.

In the appliance according to the present invention, temperature control may be based on heater unit control, wherein a set point is determined, or may be based on bypass control, wherein a controlled mix of water that is at ambient temperature and hot water is realized. Flow control may be realized by using a flow restriction or varying a pump speed.

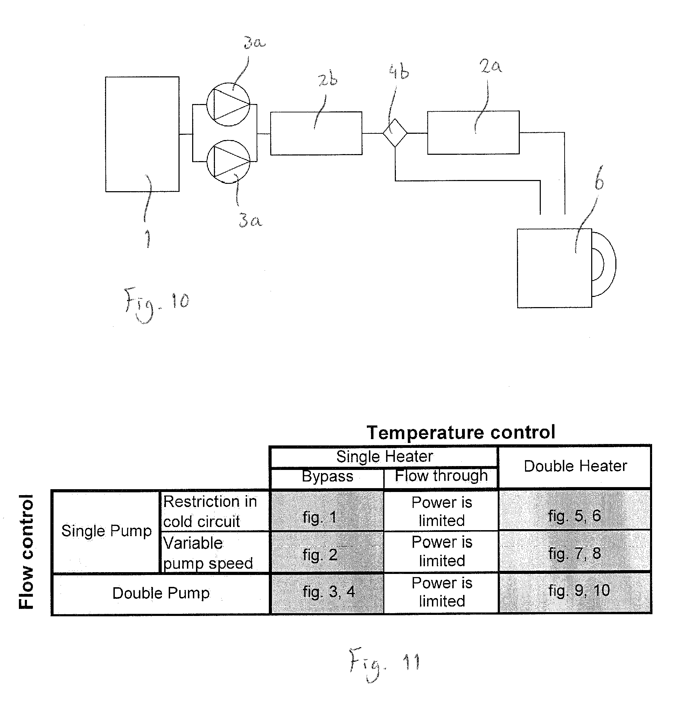

In the following, an overview of the features of the various embodiments of the appliance according to the present invention as shown in figures 1-10 is given. It is noted that figure 11 provides an overview as well. In the figures, a water tank of the appliance is indicated by reference numeral 1, a heating unit of the appliance which is used for heating water to a relatively high temperature in a range of 85°C to close to the boiling point is indicated by reference numeral 2a, a heating unit of the appliance which is used for heating water to a relatively low temperature in a range of 35°C to 55°C is indicated by reference numeral 2b, a pumping unit of the appliance is indicated by reference numeral 3a, a pumping unit of the appliance which is used for varying the flow is indicated by reference numeral 3b, a control valve of the appliance is indicated by reference numeral 4a, a 2-way valve of the appliance is indicated by reference numeral 4b, a restriction of the appliance is indicated by reference numeral 5a, a controllable restriction of the appliance is indicated by reference numeral 5b, and a cup for receiving coffee from the appliance is indicated by reference numeral 6.

The embodiment of the appliance according to the present invention as shown in figure 1 comprises a water tank 1, a single pumping unit 3a, a high temperature heating unit 2a, a bypass water flow path, a control valve 4a, and a controllable restriction 5b.

The embodiment of the appliance according to the present invention as shown in figure 2 comprises a water tank 1, a single flow varying pumping unit 3b, a high temperature heating unit 2a, a bypass water flow path, and a control valve 4a.

The embodiment of the appliance according to the present invention as shown in figure 3 comprises a water tank 1, a flow varying pumping unit 3b, a high temperature heating unit 2a, a bypass water flow path, a pumping unit 3a which is arranged in the bypass water flow path, and a control valve 4a.

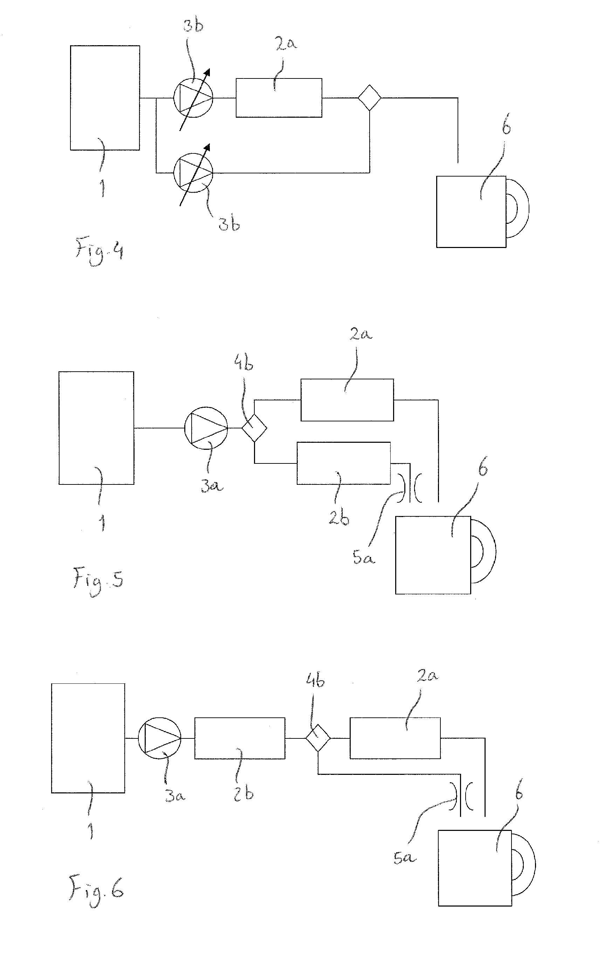

The embodiment of the appliance according to the present invention as shown in figure 4 comprises a water tank 1, a flow varying pumping unit 3b, a high temperature heating unit 2a, a bypass water flow path, and another flow varying pumping unit 3b, which is arranged in the bypass water flow path.

The embodiment of the appliance according to the present invention as shown in figure 5 comprises a water tank 1, a pumping unit 3a, a 2-way valve 4b, a high temperature heating unit 2a which is arranged in a first water flow path, a low temperature heating unit 2b which is arranged in a second water flow path, and a restriction 5a which is arranged in the second water flow path.

The embodiment of the appliance according to the present invention as shown in figure 6 comprises the same components of the embodiment of the appliance according to the present invention as shown in figure 5, wherein the 2-way valve 4b is arranged between the heating units 2a, 2b.

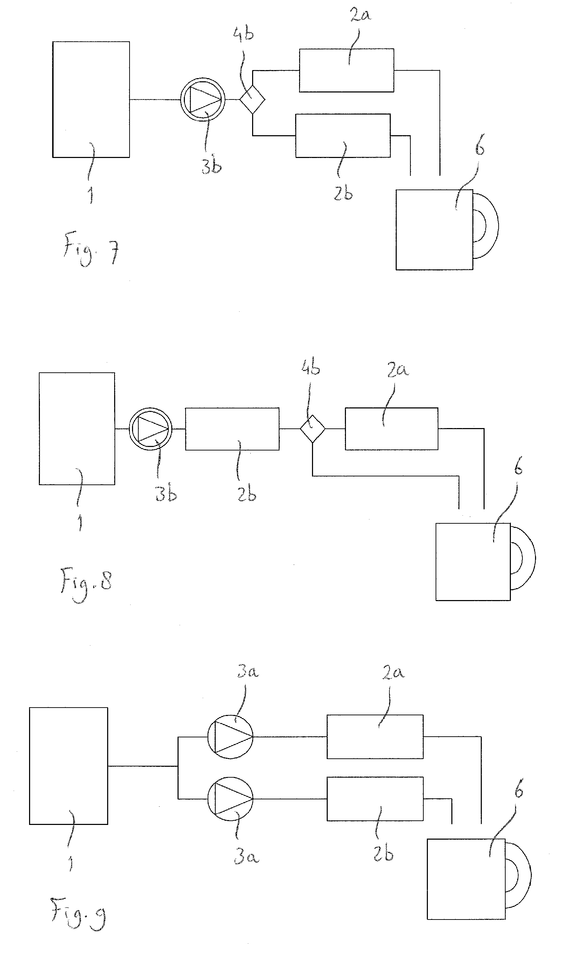

The embodiment of the appliance according to the present invention as shown in figure 7 comprises a water tank 1, a flow varying pumping unit 3b, a 2-way valve 4b, a high temperature heating unit 2a which is arranged in a first water flow path, and a low temperature heating unit 2b which is arranged in a second water flow path.

The embodiment of the appliance according to the present invention as shown in figure 8 comprises the same components of the embodiment of the appliance according to the present invention as shown in figure 7, wherein the 2-way valve 4b is arranged between the heating units 2a, 2b.

The embodiment of the appliance according to the present invention as shown in figure 9 comprises a water tank 1, two pumping units 3 a which are arranged in different water flow paths, a high temperature heating unit 2a which is arranged in one of the water flow paths, and a low temperature heating unit 2b which is arranged in another of the water flow paths.

The embodiment of the appliance according to the present invention as shown in figure 10 comprises the same components of the embodiment of the appliance according to the present invention as shown in figure 9, wherein a 2-way valve 4b is provided, and wherein this 2-way valve 4b is arranged between the heating units 2a, 2b.

Although this is not shown in figures, the appliance according to the present invention also comprises a brewing space, i.e. a space where the water at a set temperature is forced to flow through a quantity of coffee extract, a mixing space which is located downstream of the brewing space, and means for supplying ice to the mixing space. Furthermore, the appliance is equipped with means for controlling the coffee making process, and means for receiving input from a user of the appliance and transmitting the input to the controlling means.

The appliance according to the present invention may comprise means for supplying milk to the mixing space, so that a mixture of coffee and milk may be obtained by using the appliance. Cold coffee drinks with milk might require a little bit more bitter tones, favoring a somewhat higher brewing temperature of about 50°C, while pure black coffee drinks require less bitter tones, and the brewing temperature may therefore be lower, about 40°C, for example. It is also possible to have a fixed brewing temperature, for example a brewing temperature of about 45°C, wherein a milder roast may be used for the black coffee drinks and a darker roast may be used for the coffee drinks with milk.

It will be clear to a person skilled in the art that the scope of the present invention is not limited to the examples discussed in the foregoing, but that several amendments and modifications thereof are possible without deviating from the scope of the present invention as defined in the attached claims.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

Summarizing, a method for making ice coffee comprises the following steps:
extracting coffee by using water at a temperature that is in a range of 35°C to 55°C, at a normal brewing pressure that is in a range of ambient pressure to 1.5 bar, and at an extraction time that is shorter than 60 seconds, and supplying a quantity of ice to the beverage which is obtained as a result of this extraction process, in order to get the ice coffee at a temperature at which it is ready to drink. An appliance for carrying out the method may also be adapted to make hot coffee, so that a user may choose which type of coffee he/she would like to receive from the appliance.

## Claims

1. Method for making ice coffee, wherein coffee is extracted by using water at a temperature that is in a range of 35°C to 55°C, at a normal brewing pressure that is in a range of ambient pressure to 1.5 bar, and at an extraction time that is shorter than 60 seconds, and wherein a quantity of ice is supplied to the beverage which is obtained as a result of this extraction process, in order to get the ice coffee at a temperature at which it is ready to drink.

2. Method according to claim 1, wherein water at a temperature that is in a range of 40°C to 50°C is used.

3. Method according to claim 1, wherein milk is supplied to the beverage which is obtained as a result of the coffee extraction process.

4. Appliance for making ice coffee, comprising:
- a brewing space for accommodating a quantity of coffee extract;
- means for supplying water to the brewing space;
- means (2a, 2b) for heating the water;
- a mixing space which is located downstream of the brewing space;
- means for supplying ice to the mixing space;
- means (3a, 3b) which are adapted to pumping liquids; and
- controlling means for controlling a process of making the ice coffee, wherein the controlling means are adapted to control the water heating means (2a, 2b) for heating the water to a temperature that is in a range of 35°C to 55°C, to control the ice supplying means for being in an activated state, and to control the liquids pumping means (3a, 3b) for pumping the water, the beverage which is obtained when a coffee extraction process is performed, and the ice coffee which is obtained when this beverage is mixed with the ice, at a normal brewing pressure that is in a range of ambient pressure to 1.5 bar, and for performing a pumping action only during an extraction time that is shorter than 60 seconds.

5. Appliance according to claim 4, wherein the controlling means are adapted to control the water heating means (2a, 2b) for heating the water to a temperature that is in a range of 40°C to 50°C.

6. Appliance according to claim 4, further comprising means for supplying milk to the mixing space.

7. Appliance according to claim 4, wherein the controlling means are further suitable to be used for controlling a process of making hot coffee, wherein the controlling means are adapted to control the water heating means (2a, 2b) for heating the water to a temperature that is in a range of 85°C to close to the boiling point, to control the ice supplying means for being in a deactivated state, and to control the liquids pumping means (3a, 3b) for pumping the water, and the hot coffee which is obtained when a coffee extraction process is performed, at a brewing pressure that is significantly higher than ambient pressure, and for performing a pumping action only during an extraction time that is shorter than 60 seconds, and wherein means which are operable by a user of the appliance are provided for activating the controlling means for realizing a process of making ice coffee or a process of making hot coffee, depending on input provided by the user.

8. Appliance according to claim 4, wherein the means for supplying water to the brewing space comprise two water flow paths, wherein one water flow path leads to the brewing space through the water heating means (2a, 2b), and wherein another water flow path bypasses the water heating means (2a, 2b) and leads directly to the brewing space.

9. Appliance according to claim 4, wherein the water heating means (2a, 2b) comprise two separate heating units (2a, 2b).

10. Appliance according to claim 4, wherein the liquids pumping means (3a, 3b) comprise two separate pumping units (3a, 3b).
